# EUROPÄISCHE PATENTSCHRIFT

(11) **EP 3 332 164 B1**
(45) Veröffentlichungstag und Bekanntmachung des Hinweises auf die Patenterteilung: **20.01.2021**
(21) Anmeldenummer: 16753845.3
(22) Anmeldetag: 29.07.2016
(51) Int. Cl.: F16L 55/027, F02M 35/12, F16L 55/033

(54) **VORRICHTUNG ZUR ABSENKUNG VON STRÖMUNGSGERÄUSCHEN**
DEVICE FOR LOWERING FLOW NOISES
DISPOSITIF DE RÉDUCTION DES BRUITS D'ÉCOULEMENT

(30) Priorität: 03.08.2015 DE 102015112717
(43) Veröffentlichungstag der Anmeldung: 13.06.2018
(60) Teilanmeldung: 20175234.2
(73) Patentinhaber: Umfotec GmbH, 37154 Northeim (DE); Denker, Dietrich, 73760 Ostfildern (DE)
(72) Erfinder: BUCK, Ralf, 85110 Kipfenberg / Schelldorf (DE); HEUER, Michael, 34123 Kassel (DE); NAGEL, Dirk, 37586 Dassel (DE); TRÖGER, Philipp, 30169 Hannover (DE); LÜBBE, Norbert, 32289 Rödinghausen (DE)
(74) Vertreter: Schneider, Peter Christian
(86) Internationale Anmeldenummer: PCT/EP2016/068159
(87) Internationale Veröffentlichungsnummer: WO 2017/021298

(56) Entgegenhaltungen:
- DE-T2- 60 019 179
- DE-U1-202015 102 914
- US-A- 4 327 817

## Beschreibung

### Gebiet der Erfindung

Die Erfindung betrifft eine Vorrichtung zur Absenkung von Strömungsgeräuschen umfassend ein erstes Anschlussstück, ein dem ersten Anschlussstück abgewandtes zweites Anschlussstück, eine zwischen dem ersten Anschlussstück und dem zweiten Anschlussstück angeordnete Außenhülse, und eine zwischen den Anschlussstücken angeordnete Innenhülse, wobei zwischen der Innenhülse und der Außenhülse mindestens zwei durch mindestens einen umlaufenden radialen Kragen voneinander getrennte Volumenkammern angeordnet sind, die über Öffnungen in der Wandung der Innenhülse mit dem von der Innenhülse umschlossenen Leitungsraum in Verbindung stehen, wobei der radiale Kragen an seinem freien Ende einen Dichtring aufweist und wobei der Dichtring als eine den Kragen übergreifende Ringkappe ausgebildet ist, die einerseits mit einer umlaufenden äußeren Mantelfläche der Ringkappe an einer dem freien Ende des Kragens benachbarten Wandungsfläche der Hülse und andererseits mit seiner der äußeren Mantelfläche abgewandten inneren Mantelfläche an der Stirnfläche des freien Endes des Kragens unter Spannung dichtend anliegt oder andererseits mit einer parallel zum radialen Kragen verlaufenden ringförmigen radialen Anlagefläche an der der Ringkappe zugewandten Seitenfläche des Kragens dichtend anliegt.

### Stand der Technik

Eine derartige Vorrichtung zur Absenkung von Strömungsgeräuschen ist aus der DE 20 2015 102 914 U1 bekannt.

Bei Verwendung von beispielsweise Abgasturboladern in Verbindung mit Verbrennungsmotoren kommt es in Folge hoher Drehzahlen, nicht beherrschbarer Unwuchten, Störungen durch fertigungsbedingte Verzüge (z.B. Schaufeln) sowie erhöhten Luftmassendurchsätzen, zu unerwünschten Strömungsgeräuschen. Diese Strömungsgeräusche werden durch entsprechende Vorrichtungen bzw. Dämpfer breitbandig abgesenkt. Die Vorrichtungen bzw. die Dämpfer sind u.a. zwischen Turbolader und Verbrennungsmaschine bzw. zwischen Turbolader und einem der Verbrennungsmaschine vorgelagerten Luftkühler angeordnet.

Eine solche Vorrichtung zur Absenkung von Strömungsgeräuschen ist beispielsweise aus der DE 10 2004 049 446 A1 bekannt. Die bekannte Vorrichtung weist eine zwischen einem Einlassstück und ein einem Auslassstück angeordnete Außenhülse sowie eine zwischen dem Einlassstück und dem Auslassstück angeordnete Innenhülse auf. Zwischen der Innenhülse und der Außenhülse sind zwei durch einen umlaufenden radial ausgerichteten Kragen an der Außenhülse voneinander getrennte Volumenkammern (Resonanzkammern) angeordnet, die über Öffnungen in der Wandung der Innenhülse mit dem von der Innenhülse umschlossenen Leitungsraum in Verbindung stehen.

Nachteilig bei der bekannten Vorrichtung, die sich prinzipiell bewährt hat, ist, dass in Abhängigkeit von bestehenden Toleranzen der die Kammern voneinander trennende Kragen nicht ausreichend trennt oder abdichtet und dadurch unerwünschte Frequenzänderungen bzw. Änderungen der Dämpfungseigenschaften auftreten können.

Die eingangs erwähnte, gattungsbildende DE 20 2015 102 914 U1 offenbart ebenfalls eine Vorrichtung zur Absenkung von Strömungsgeräuschen, die ein erstes Anschlussstück, ein dem ersten Anschlussstück abgewandtes zweites Anschlussstück, eine zwischen dem ersten Anschlussstück und dem zweiten Anschlussstück angeordnete Außenhülse, und eine zwischen den Anschlussstücken angeordnete Innenhülse umfasst. Dabei sind zwischen der Innenhülse und der Außenhülse mindestens zwei durch mindestens einen umlaufenden radialen Kragen voneinander getrennte Volumenkammern angeordnet. Die Volumenkammern stehen über Öffnungen in der Wandung der Innenhülse mit dem von der Innenhülse umschlossenen Leitungsraum in Verbindung, wobei der radiale Kragen an seinem freien Ende einen Dichtring aufweist.

Nachteilig bei dieser bekannten Vorrichtung, die sich ebenfalls prinzipiell bewährt hat, ist, dass der bekannte Dichtring einerseits mindestens eine schräg vom radialen Kragen wegführende Dichtlippe aufweist und andererseits mit seinem der Dichtlippe abgewandten kragenseitigen Ende mit einem u-förmigen Einschnitt das freie Ende des Kragens kappenartig umgreift. Diese Ausbildung setzt allerdings voraus, dass der Dichtring aus einem Elastomer ausgebildet ist. Nachteilig bei Elastomeren ist jedoch, dass sich ihre Eigenschaften durch Temperaturschwankungen unerwünscht verändern können.

Aus der GB 2 389 150 A ist eine Vorrichtung zur Absenkung von Strömungsgeräuschen bekannt, die ein erstes Anschlussstück, ein dem ersten Anschlussstück abgewandtes zweites Anschlussstück, eine zwischen dem ersten Anschlussstück und dem zweiten Anschlussstück angeordnete Außenhülse, und eine zwischen den Anschlussstücken angeordnete Innenhülse umfasst. Zwischen der Innenhülse und der Außenhülse sind mindestens zwei durch mindestens einen umlaufenden radialen Kragen voneinander getrennte Volumenkammern angeordnet, die über Öffnungen in der Wandung der Innenhülse mit dem von der Innenhülse umschlossenen Leitungsraum in Verbindung stehen. Dabei weist der radiale Kragen an seinem freien Ende einen als O-Ring ausgebildeten Dichtring aus einem Elastomer auf.

Nachteilig bei dieser bekannten Vorrichtung ist, dass insbesondere bei Verwendung von unterschiedlichen Materialien mit unterschiedlichen Ausdehnungskoeffizienten für die Außenhülse und die Innenhülse und aufgrund bestehender Toleranzen, der radiale Kragen mit seinem freien Ende auch bei Verwendung einer O-Ringdichtung, die zwischen Kragen und benachbarter Hülse angeordnet ist, die von ihm unterteilten Kammern nicht ausreichend voneinander trennt oder abdichtet und dadurch unerwünschte Frequenzänderungen bzw. Änderungen der Dämpfungseigenschaften auftreten können.

Weiterhin ist aus der EP 2 256 330 B1 eine Vorrichtung zur Absenkung von Strömungsgeräuschen bekannt. Die bekannte Vorrichtung weist ebenfalls eine zwischen einem Einlassstück und einem Auslassstück angeordnete Außenhülse sowie eine zwischen dem Einlassstück und dem Auslassstück angeordnete Innenhülse auf. Zwischen der Innenhülse und der Außenhülse sind ebenfalls zwei durch einen umlaufenden radial ausgerichteten Kragen in der Innenhülse voneinander getrennten Volumenkammern (Resonanzkammern) angeordnet, die über Schlitze in der Wandung der Innenhülse mit dem von der Innenhülse umschlossenen Leitungsraum in Verbindung stehen.

Nachteilig auch bei dieser bekannten Vorrichtung ist, dass in Abhängigkeit von bestehenden Toleranzen der die Kammern voneinander trennende Kragen diese nicht ausreichend trennt oder abdichtet und dadurch unerwünschte Frequenzänderungen bzw. Änderungen der Dämpfungseigenschaften auftreten können.

Weiterhin ist aus der DE 600 19 179 T2 eine Ventileinrichtung mit niedriger Leckage bekannt. Die Ventileinrichtung weist mehrere Drosselklappenventile auf, die auf einer Welle gezielt angeordnet sind. Die Welle und die Drosselklappenventile sind in einem Luftventilblock aufgenommen, der den Drosselklappenventilen zugeordnete Durchlasskanäle aufweist. Die Welle unterteilt jedes Drosselklappenventil in einen ersten Flügel und einen zweiten Flügel. An dem ersten Flügel ist an dessen Außenrand ein erstes elastisches Dichtungsmittel befestigt. Das erste elastische Dichtungsmittel enthält eine vorspringende Lippe, die dazu eingerichtet ist, gegen eine Konturseitenwand des Durchlasskanals in dem Ventilblock abzudichten, wenn darauf ein Unterdruck einwirkt.

Nachteilig bei der bekannten Vorrichtung ist, dass zur sicheren Abdichtung ein Unterdruck im Ventilblock notwendig ist. Weiterhin nachteilig ist, dass zur Abdichtung der Flügel mit ihren Dichtmitteln gegenüber dem Durchlasskanal, d.h. seinen Konturseitenwänden, der erste Flügel eine größere Fläche aufweisen muss als der zweite Flügel, damit ein Drehmoment für eine vergrößerte Dichtungskraft erzeugt wird, wenn ein Unterdruck anliegt.

Aus der US 4 327 817 A ist eine Vorrichtung zur Absenkung von Strömungsgeräuschen insbesondere bei druckluftbetätigten Werkzeugen bekannt. Dabei ist zwischen einer ringförmigen Stirnfläche eines freien Endes eines Mantelteiles und dem Ende einer Trennwand zur Abdichtung ein O-Ring vorgesehen.

### Aufgabenstellung

Es ist die Aufgabe der vorliegenden Erfindung, die bekannten Vorrichtungen so zu verbessern, dass die Temperaturbeständigkeit des Dichtrings erhöht wird.

### Darlegung der Erfindung

Diese Aufgabe wird in Verbindung mit den Merkmalen des Oberbegriffs von Anspruch 1 dadurch gelöst, dass der Dichtring aus einem Drahtgestrick oder aus einem Gestrick aus Silikatfasern oder aus einem Mischgestrick aus Draht und Silikatfasern ausgebildet ist.

Die Ausbildung des Dichtringes aus einem Drahtgestrick führt zu den gewünschten elastischen Eigenschaften. Zudem weist ein Drahtgestrick eine hohe Temperaturbeständigkeit und gute Dämmeigenschaften auf. Der Dichtring kann aber auch aus einem Gestrick aus Silikatfasern oder aus einem Mischgestrick aus Draht und Silikatfasern ausgebildet sein.

Durch die Ausbildung des Dichtringes als eine den Kragen übergreifende Ringkappe, die einerseits mit einer äußeren Mantelfläche an der Wandungsfläche der benachbarten Hülse (je nach Anordnung des Kragens Außenhülse oder Innenhülse) dichtend anliegt und die andererseits mit ihrer der äußeren Mantelfläche abgewandten inneren Mantelfläche an der Stirnfläche des freien Endes des Kragens dichtend anliegt, kann ein relativ großer Zwischenraum zwischen freiem Ende des radialen Kragens und der benachbarten Hülse bei sicherer Abdichtung überbrückt werden. Alternativ kann die Ringkappe einerseits mit ihrer äußeren Mantelfläche an der Wandungsfläche der benachbarten Hülse und andererseits mit einer parallel zum radialen Kragen verlaufenden ringförmigen radialen Anlagefläche an der der Ringkappe zugewandten radial angeordneten Seitenfläche des Kragens dichtend anliegen. Durch die alternative Lösung kann ein noch größerer Zwischenraum zwischen dem freien Ende des radialen Kragens und der benachbarten Hülse bei sicherer Abdichtung überbrückt werden. Dabei kann der Dichtring mit seiner parallel zum radialen Kragen verlaufenden ringförmigen radialen Anlagefläche an der der Ringkappe zugewandten, radial angeordneten Seitenfläche des Kragens anschlagen. Sowohl der radiale Kragen als auch der Dichtring sind dabei durch ihre relativ einfache geometrische Form relativ einfach und kostengünstig herstellbar und montierbar. Durch die kappenartige Ausgestaltung des Dichtringes kann der Kragen als einfache umlaufende Wandung in radialer Richtung ausgebildet sein. Der Dichtring lässt sich zudem relativ einfach und sicher am Kragen platzieren und die Hülsen können ineinander geschoben werden ohne den Dichtring zu deplatzieren. Weiterhin vorteilhaft durch die kappenartige Ausgestaltung ist, dass die Wandstärke des umlaufenden Kragens relativ dünn ausgebildet sein kann. Dadurch kann die Baulänge zweier benachbarter Volumenkammern verringert oder bei gleicher Baulänge das Volumen der Volumenkammern vergrößert werden.

Bevorzugte Ausführungsformen sind Gegenstand der abhängigen Ansprüche.

Gemäß einer bevorzugten Ausführungsform der Erfindung weist der Dichtring elastische Eigenschaften auf. Damit bildet der Dichtring ein elastisches Ausgleichselement, das unterschiedliche Ausdehnungen von unterschiedlichen Materialien mit unterschiedlichen Wärmeausdehnungskoeffizienten ausgleicht und die Volumenkammern sicher abdichtet.

Nach einer weiteren bevorzugten Ausführungsform der Erfindung ist der umlaufende radiale Kragen mit seinem dem freien Ende abgewandten fixen Ende an der Innenhülse fest angeordnet und mit seinem freien Ende gegenüber der Außenhülse durch den Dichtring abgedichtet.

Nach einer anderen bevorzugten Ausführungsform der Erfindung ist der umlaufende radiale Kragen mit seinem dem freien Ende abgewandten fixen Ende an der Außenhülse fest angeordnet und mit seinem freien Ende gegenüber der Innenhülse durch den Dichtring abgedichtet.

Gemäß einer bevorzugten Ausführungsform der Erfindung sind die mit dem fixen Ende des Kragens verbundene Hülse und der Kragen aus einem Kunststoff ausgebildet.

Gemäß einer weiteren bevorzugten Ausführungsform der Erfindung ist die nicht mit dem fixen Ende des Kragens verbundene Hülse aus Metall oder Aluminium ausgebildet.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine Seitenansicht im Schnitt einer Vorrichtung zur Absenkung von Strömungsgeräuschen mit einer Außenhülse und einer Innenhülse mit angeformtem Kragen und Dichtringen aus einem Drahtgestrick, die den jeweiligen Kragen als Ringkappe übergreifen;
- Figur 2:: eine vergrößerte Darstellung der Einzelheit II von Figur 1;
- Figur 3:: eine Seitenansicht im Schnitt einer Vorrichtung zur Absenkung von Strömungsgeräuschen mit einer Außenhülse mit angeformtem Kragen und Dichtringen aus einem Drahtgestrick, die den jeweiligen Kragen als Ringkappe übergreifen und einer Innenhülse;
- Figur 4:: eine vergrößerte Darstellung der Einzelheit IV von Figur 3;
- Figur 5:: eine vergrößerte Darstellung des Dichtringes von Figur 1 entlang der Linie V-V von Figur 6 geschnitten;
- Figur 6:: eine Vorderansicht auf den Dichtring von Figur 5 aus Richtung VI.

### Beschreibung bevorzugter Ausführungsformen

Eine Vorrichtung 1 zur Absenkung von Strömungsgeräuschen (Schalldämpfer) besteht im Wesentlichen aus einem ersten Anschlussstück 2, einem zweiten Anschlussstück 3, einer Außenhülse 4 und einer Innenhülse 5.

In den Ausführungsbeispielen sind die Außenhülse 4 und die Innenhülse 5 jeweils konzentrisch zueinander und zwischen dem ersten Anschlussstück 2 und dem zweiten Anschlussstück 3 angeordnet. Insbesondere die Außenhülse 4 kann von der Kreisform abweichen und beispielsweise aus zwei nicht dargestellten Halbschalen ausgebildet sein. Zwischen der Innenhülse 5 und der Außenhülse 4 sind jeweils zwei benachbarte und durch einen umlaufenden radialen Kragen 6 voneinander getrennte Volumenkammern 7, 8, 9, 10 angeordnet, die über Öffnungen 11 in der Wandung 12 der Innenhülse 5 mit dem von der Innenhülse 5 umschlossenen Leitungsraum 13 in Verbindung stehen. In den Ausführungsbeispielen sind die Öffnungen 11 als Schlitze dargestellt. Sie können aber auch beispielsweise als Bohrungen ausgebildet sein.

Das erste Anschlussstück 2 bildet ein Einlassstück und das zweite Anschlussstück 3 bildet ein Auslassstück. Grundsätzlich kann das erste Anschlussstück 2 auch das Auslassstück und das zweite Anschlussstück 3 das Einlassstück bilden.

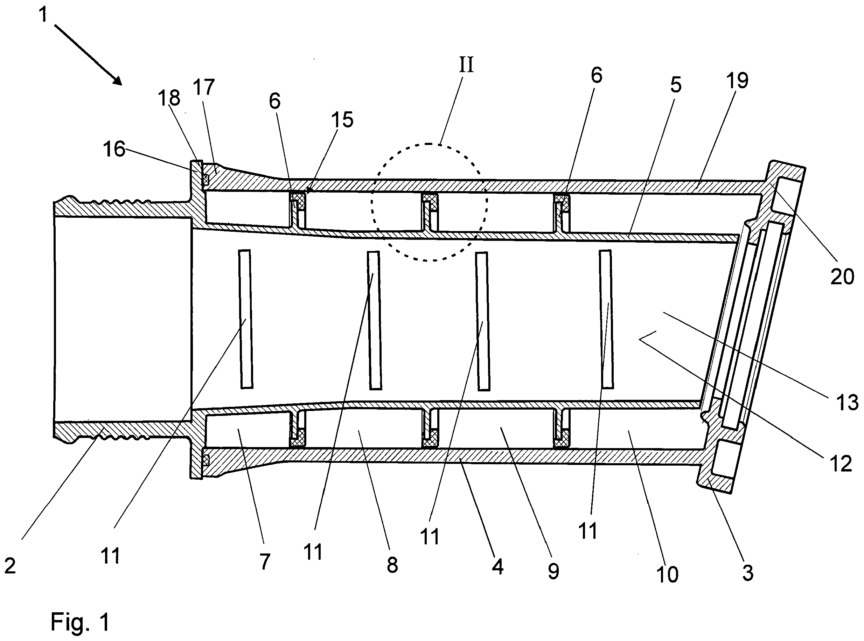

Entsprechend dem Ausführungsbeispiel der Figur 1 ist der umlaufende radiale Kragen 6 an der Innenhülse 5 fest angeordnet, beispielsweise angeformt, und weist an seinem freien Ende 14 zur Abdichtung gegenüber der Außenhülse 4 einen Dichtring 15 aus einem Drahtgestrick auf. Das erste Anschlussstück 2 weist an seinem dem zweiten Anschlussstück 3 zugewandten Ende eine Seitenwandung 16 auf, die die erste Volumenkammer 7 zum ersten Anschlussstück 2 hin seitlich, das heißt in Längsrichtung, begrenzt und im Ausführungsbeispiel (nicht zwingend) mit der Innenhülse 5 verbunden ist. Die Außenhülse 4 liegt mit ihrem dem ersten Anschlussstück 2 zugewandten ersten Ende 17 an der Seitenwandung 16 des Anschlussstückes 2 an. Entsprechend dem Ausführungsbeispiel von Figur 1 ist der Seitenwandung 16 zum ersten Ende 17 hin in einer Nut eine Dichtung 18 aus einem Elastomer vorgelagert. Das zweite Anschlussstück 3 weist an dem dem ersten Anschlussstück 2 abgewandten zweiten Ende 19 der Außenhülse 4 eine Seitenwandung 20 auf, die die Volumenkammer 10 zum zweiten Anschlussstück 3 hin seitlich, das heißt in Längsrichtung, begrenzt und im Ausführungsbeispiel (nicht zwingend) mit der Außenhülse 4 verbunden ist.

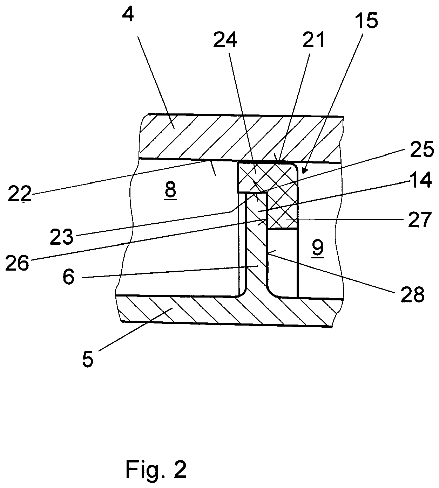

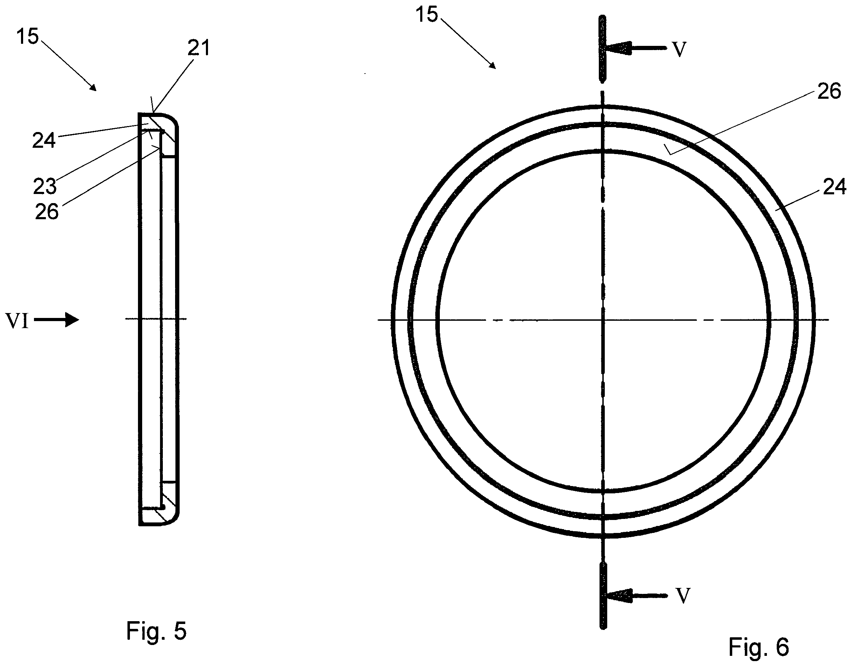

Entsprechend dem Ausführungsbeispiel von Figur 2 (Einzelheit II von Fig. 1) und den Figuren 5-6 ist der Dichtring 15 als eine den Kragen 6 übergreifende Ringkappe ausgebildet, die mit einer umlaufenden äußeren Mantelfläche 21 der Ringkappe an einer dem freien Ende 14 des Kragens 6 benachbarten Wandungsfläche 22 der Außenhülse 4 unter Spannung dichtend anliegt. Mit ihrer der äußeren Mantelfläche 21 abgewandten inneren Mantelfläche 23 liegt der Mantel 24 der Ringkappe unter Spannung dichtend an der Stirnfläche 25 des freien Endes 14 des Kragens 6 an. Durch die elastischen Eigenschaften des aus einem Drahtgestrick ausgebildeten Dichtringes 15 dichtet der Mantel 24 den Zwischenraum zwischen dem freien Ende 14 und der benachbarten Wandungsfläche 22 der Außenhülse 4 ab. Mit einer parallel zum radialen Kragen 6 verlaufenden ringförmigen radialen Anlagefläche 26 einer Ringwandung 27, die in den Mantel 24 der Ringkappe übergeht, schlägt der Dichtring 15 an eine Seitenfläche 28 des Kragens 6 an.

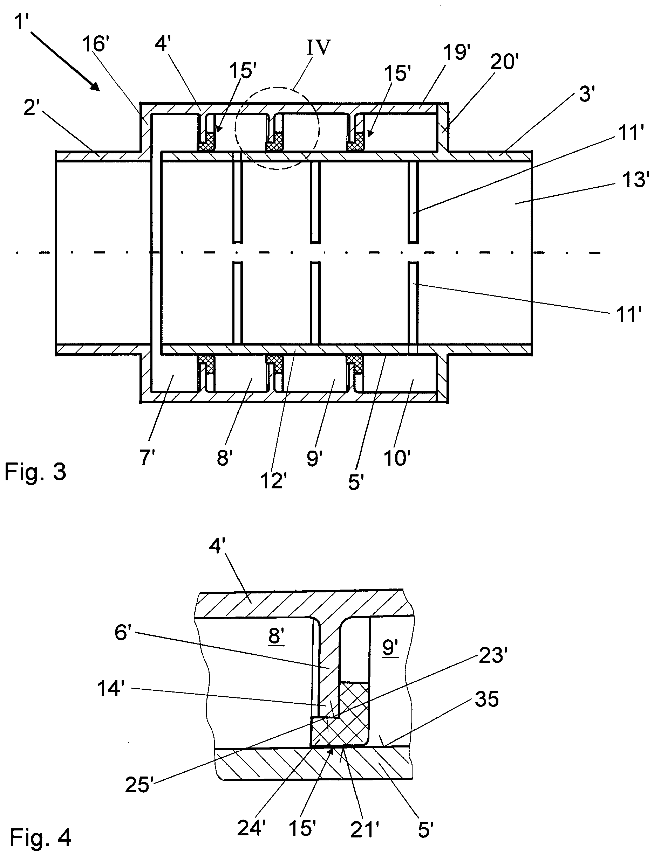

Entsprechend der Vorrichtung 1' des Ausführungsbeispiels der Figuren 3 und 4 (Einzelheit IV von Fig. 3) ist der umlaufende radiale Kragen 6' an der Außenhülse 4' fest angeordnet, beispielsweise angeformt, und weist an seinem freien Ende 14' zur Abdichtung gegenüber der Innenhülse 5' den Dichtring 15' aus dem Drahtgestrick auf. Zwischen der Innenhülse 5' und der Außenhülse 4' sind jeweils zwei benachbarte und durch einen umlaufenden radialen Kragen 6' voneinander getrennte Volumenkammern 7', 8', 9', 10' angeordnet, die über Öffnungen 11' in der Wandung 12' der Innenhülse 5' mit dem von der Innenhülse 5' umschlossenen Leitungsraum 13' in Verbindung stehen. Das erste Anschlussstück 2' weist an seinem dem zweiten Anschlussstück 3' zugewandten Ende eine Seitenwandung 16' auf, die die erste Volumenkammer 7' zum ersten Anschlussstück 2' hin seitlich, das heißt in Längsrichtung, begrenzt und im Ausführungsbeispiel (nicht zwingend) mit der Außenhülse 4' verbunden ist. Die Außenhülse 4' liegt mit ihrem dem zweiten Anschlussstück 3' zugewandten zweiten Ende 19' an der Seitenwandung 20' des Anschlussstückes 3' an. Die Seitenwandung 20' begrenzt die Volumenkammer 10' zum zweiten Anschlussstück 3' hin seitlich, das heißt in Längsrichtung, und ist mit der Innenhülse 5' verbunden. Der Dichtring 15' liegt mit seiner umlaufenden äußeren Mantelfläche 21' an der dem freien Ende 14' des Kragens 6' benachbarten Wandungsfläche 35 der Innenhülse 5' unter Spannung dichtend an. Mit ihrer der äußeren Mantelfläche 21' abgewandten inneren Mantelfläche 23' liegt der Mantel 24' der Ringkappe unter Spannung dichtend an der Stirnfläche 25' des freien Endes 14' des Kragens 6' an.

Natürlich stellen die in der speziellen Beschreibung diskutierten und in den Figuren gezeigten Ausführungsformen nur illustrative Ausführungsbeispiele der vorliegenden Erfindung dar. So lassen sich zum Beispiel Ein- und Auslass, d. h. die Strömungsrichtung, vertauschen. Das Wirkprinzip kann neben der Anwendung auf zylindrische Querschnitte auch auf anderweitige Querschnittsformen angewendet werden. Dem Fachmann ist im Lichte der hiesigen Offenbarung ein breites Spektrum von Variationsmöglichkeiten an die Hand gegeben.

### Bezugszeichenliste

- 1,1': Vorrichtung
- 2, 2': erstes Anschlussstück
- 3, 3': zweites Anschlussstück
- 4,4': Außenhülse
- 5,5': Innenhülse
- 6,6': Kragen
- 7,7': Volumenkammer
- 8,8': Volumenkammer
- 9,9': Volumenkammer
- 10, 10': Volumenkammer
- 11,11': Öffnung
- 12: Wandung von 5
- 13, 13': Leitungsraum von 5
- 14, 14': freies Ende von 6
- 15, 15': Dichtring
- 16, 16': Seitenwandung von 2
- 17: erstes Ende von 4
- 18: Dichtung von 17
- 19, 19': zweites Ende von 4
- 20: Seitenwandung von 3
- 21, 21': äußere Mantelfläche von 15
- 22: Wandungsfläche von 4
- 23, 23': innere Mantelfläche von 15
- 24,24': Mantel von 15
- 25, 25': Stirnfläche von 14
- 26: radiale Anlagefläche von 27
- 27: Ringwandung von 15
- 28: Seitenfläche von 6
- 35: Wandungsfläche von 5'

## Patentansprüche

1. Vorrichtung (1, 1') zur Absenkung von Strömungsgeräuschen umfassend ein erstes Anschlussstück (2, 2'), ein dem ersten Anschlussstück (2, 2') abgewandtes zweites Anschlussstück (3, 3'), eine zwischen dem ersten Anschlussstück (2, 2') und dem zweiten Anschlussstück (3, 3') angeordnete Außenhülse (4, 4'), und eine zwischen den Anschlussstücken (2, 2',3, 3') angeordnete Innenhülse (5, 5'), wobei zwischen der Innenhülse (5, 5') und der Außenhülse (4, 4') mindestens zwei durch mindestens einen umlaufenden radialen Kragen (6, 6') voneinander getrennte Volumenkammern (7, 7', 8, 8', 9, 9', 10, 10') angeordnet sind, die über Öffnungen (11, 11') in der Wandung (12, 12') der Innenhülse (5, 5') mit dem von der Innenhülse (5, 5') umschlossenen Leitungsraum (13, 13') in Verbindung stehen, wobei der radiale Kragen (6, 6') an seinem freien Ende (14, 14') einen Dichtring (15, 15') aufweist, und wobei der Dichtring (15, 15') als eine den Kragen (6, 6') übergreifende Ringkappe ausgebildet ist, die einerseits mit einer umlaufenden äußeren Mantelfläche (21) der Ringkappe an einer dem freien Ende (14, 14') des Kragens (6, 6') benachbarten Wandungsfläche (22, 35) der Hülse (4, 4', 5, 5') und andererseits mit seiner der äußeren Mantelfläche (21, 21') abgewandten inneren Mantelfläche (23, 23') an der Stirnfläche (25, 25') des freien Endes (14, 14') des Kragens (6, 6') unter Spannung dichtend anliegt oder andererseits mit einer parallel zum radialen Kragen (6, 6') verlaufenden ringförmigen radialen Anlagefläche (26, 26") an der der Ringkappe zugewandten Seitenfläche (28) des Kragens (6, 6') dichtend anliegt,
**dadurch gekennzeichnet,**
**dass** der Dichtring (15, 15') aus einem Drahtgestrick oder aus einem Gestrick aus Silikatfasern oder aus einem Mischgestrick aus Draht und Silikatfasern ausgebildet ist.

2. Vorrichtung nach Anspruch 1,
**dadurch gekennzeichnet,**
**dass** der Dichtring (15, 15') elastische Eigenschaften aufweist.

3. Vorrichtung nach Anspruch 1 oder 2,
**dadurch gekennzeichnet,**
**dass** der umlaufende radiale Kragen (6) mit seinem dem freien Ende (14) abgewandten fixen Ende an der Innenhülse (5) fest angeordnet ist und mit seinem freien Ende (14) gegenüber der Außenhülse (4) durch den Dichtring (15) abgedichtet ist.

4. Vorrichtung nach einem der Ansprüche 1 bis 3,
**dadurch gekennzeichnet,**
**dass** der umlaufende radiale Kragen (6') mit seinem dem freien Ende (14') abgewandten fixen Ende an der Außenhülse (4') fest angeordnet ist und mit seinem freien Ende (14') gegenüber der Innenhülse (5') durch den Dichtring (15') abgedichtet ist.

5. Vorrichtung nach einem der Ansprüche 1 bis 4,
**dadurch gekennzeichnet,**
**dass** die mit dem fixen Ende des Kragens (6, 6') verbundene Hülse (5, 4') und der Kragen (6, 6') aus einem Kunststoff ausgebildet sind.

6. Vorrichtung nach einem der Ansprüche 1 bis 5,
**dadurch gekennzeichnet,**
**dass** die nicht mit dem fixen Ende des Kragens (6, 6') verbundene Hülse (4, 5') aus Metall oder Aluminium ausgebildet ist.

## Claims

1. A device (1, 1') for lowering flow noises, comprising a first connection piece (2, 2'), a second connection piece (3, 3') facing away from the first connection piece (2, 2'), an outer sleeve (4, 4') arranged between the first connection piece (2, 2') and the second connection piece (3, 3'), and an inner sleeve (5, 5') arranged between the connection pieces (2, 2', 3, 3'), wherein at least two volume chambers (7, 7', 8, 8', 9, 9', 10, 10') separated from each other by at least one peripherally extending radial collar (6, 6') are arranged between the inner sleeve (5, 5') and the outer sleeve (4, 4'), which volume chambers are connected to the line space (13, 13') enclosed by the inner sleeve (5, 5') by means of openings (11, 11') in the wall (12, 12') of the inner sleeve (5, 5'), wherein the radial collar (6, 6') has a sealing ring (15, 15') at the free end (14, 14') of the radial collar, and wherein the sealing ring (15, 15') is designed as a ring cap, which reaches over the collar (6, 6') and lies, on the one hand, against a wall surface (22, 35) of the sleeve (4, 4', 5, 5') adjacent to the free end (14, 14') of the collar (6, 6') in a sealing manner by means of a peripherally extending outer lateral surface (21, 21') of the ring cap and, on the other hand, against the end face (25, 25') of the free end (14, 14') of the collar (6, 6') in a sealing manner by means of the inner lateral surface (23, 23') of the sealing ring facing away from the outer lateral surface (21, 21') or lies against the side surface (28) of the collar (6, 6') facing the ring cap in a sealing manner by means of an annular radial contact surface (26, 26") extending parallel to the radial collar (6, 6'),
**characterized in that**
the sealing ring (15, 15') is made from a wire mesh or from a mesh made of silicate fibers or from a compound mesh made of wire and silicate fibers.

2. The device according to claim 1,
**characterized in that**
the sealing ring (15, 15') has elastic properties.

3. The device according to claim 1 or 2,
**characterized in that**
the peripherally extending radial collar (6), with its fixed end facing away from the free end (14), is securely arranged at the inner sleeve (5) and with its free end (14) is sealed against the outer sleeve (4) by means of the sealing ring (15).

4. The device according to any of claims 1 to 3,
**characterized in that**
the peripherally extending radial collar (6'), with its fixed end facing away from the free end (14'), is securely arranged at the outer sleeve (4') and with its free end (14') is sealed against the inner sleeve (5') by means of the sealing ring (15').

5. The device according to any of claims 1 to 4,
**characterized in that**
the sleeve (5, 4') connected to the fixed end of the collar (6, 6') and the collar (6, 6') are made of plastic.

6. The device according to any of claims 1 to 5,
**characterized in that**
the sleeve (4, 5') not connected to the fixed end of the collar (6, 6') is made of aluminum or metal.

## Revendications

1. Dispositif (1, 1') de réduction des bruits d'écoulement, comprenant une première pièce de raccordement (2, 2'), une seconde pièce de raccordement (3, 3') opposée à la première pièce de raccordement (2, 2'), un manchon extérieur (4, 4') disposé entre la première pièce de raccordement (2, 2') et la seconde pièce de raccordement (3, 3') et un manchon intérieur (5, 5') disposé entre les pièces de raccordement (2, 2', 3, 3'), sachant qu'au moins deux chambres volumétriques (7, 7', 8, 8', 9, 9', 10, 10') séparées l'une de l'autre par au moins une collerette (6, 6') radiale périphérique sont disposées entre le manchon intérieur (5, 5') et le manchon extérieur (4, 4'), lesdites chambres volumétriques étant en liaison avec l'espace de conduite (13, 13') enfermé par le manchon intérieur (5, 5') au moyen des ouvertures (11, 11') aménagées dans la paroi (12, 12') du manchon intérieur (5, 5'), sachant que la collerette radiale (6, 6') comporte à son extrémité libre (14, 14') une bague d'étanchéité (15, 15') et que la bague d'étanchéité (15, 15') se présente sous la forme d'un capuchon annulaire qui chevauche la collerette (6, 6') et qui vient en contact étanche, sous contrainte, d'une part, moyennant une surface latérale extérieure périphérique (21, 21'), avec une surface de paroi (22, 35) du manchon (4, 4', 5, 5'), voisine de l'extrémité libre (14, 14') de la collerette (6, 6'), et, d'autre part, moyennant sa surface latérale intérieure (23, 23') opposée à la surface périphérique extérieure (21, 21'), avec la face frontale (25, 25') de l'extrémité libre (14, 14') de la collerette (6, 6'), ou qui autrement vient en contact étanche, moyennant une surface de contact radiale (26, 26") annulaire s'étendant parallèlement à la collerette (6, 6') radiale, avec la surface latérale (28) de la collerette (6, 6'), orientée vers le capuchon annulaire,
**caractérisé en ce**
**que** la bague d'étanchéité (15, 15') est réalisée en maillage métallique ou en maillage de fibres de silicate ou en maillage mixte de fil métallique et de fibres de silicate.

2. Dispositif selon la revendication 1,
**caractérisé en ce**
**que** la bague d'étanchéité (15, 15') présente des propriétés élastiques.

3. Dispositif selon la revendication 1 ou 2,
**caractérisé en ce**
**que** la collerette (6) radiale périphérique est solidaire du manchon intérieur (5) à son extrémité fixe opposée à l'extrémité libre (14) et qu'elle est étanchée par la bague d'étanchéité (15) à son extrémité libre (14) vis-à-vis du manchon extérieur (4).

4. Dispositif selon l'une des revendications 1 à 3,
**caractérisé en ce**
**que** la collerette (6') radiale périphérique est solidaire du manchon extérieur (4') à son extrémité fixe opposée à l'extrémité libre (14') et qu'elle est étanchée par la bague d'étanchéité (15') à son extrémité libre (14') vis-à-vis du manchon intérieur (5').

5. Dispositif selon l'une des revendications 1 à 4,
**caractérisé en ce**
**que** le manchon (5, 4') relié à l'extrémité fixe de la collerette (6, 6') et la collerette (6, 6') sont réalisés en matière plastique.

6. Dispositif selon l'une des revendications 1 à 5,
**caractérisé en ce**
**que** le manchon (4, 5') qui n'est pas relié à l'extrémité fixe de la collerette (6, 6') est réalisé en métal ou en aluminium.
